(19) Europäisches Patentamt
European Patent Office
Office européen des brevets

(11) Publication number: 0 161 766
B1

(12) EUROPEAN PATENT SPECIFICATION

(45) Date of publication of patent specification: 18.10.89

(51) Int. Cl.[4]: B 27 N 3/04, C 08 L 97/02

(21) Application number: 85302130.1

(22) Date of filing: 27.03.85

(54) **Composite products from lignocellulosic materials.**

(30) Priority: 30.03.84 JP 62946/84

(43) Date of publication of application:
21.11.85 Bulletin 85/47

(45) Publication of the grant of the patent:
18.10.89 Bulletin 89/42

(84) Designated Contracting States:
AT BE CH DE FR GB IT LI NL SE

(56) References cited:
WO-A-80/01891

(73) Proprietor: Shen, Kuo Cheng
2118 Radford Court
Ottawa Ontario, K1J 8K1 (CA)

(72) Inventor: Shen, Kuo Cheng
2118 Radford Court
Ottawa Ontario, K1J 8K1 (CA)

(74) Representative: Seaborn, George Stephen et al
c/o Edward Evans & Co. Chancery House 53-64
Chancery Lane
London WC2A 1SD (GB)

EP 0 161 766 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

Field of the invention

This invention relates to a process of converting lignocellulosic materials into composite products. This invention particularly relates to a process of converting lignocellulosic materials into composite products such as panel products, reconstituted lumber and moulded articles, without the use of any adhesive binders which are an essential part of the conventional dry process of manufacturing composite products, such as wood-based particle-board, waferboard and medium density fibreboard.

Background of the invention

In my United States patent no. 4,627,951 there is disclosed a process for making composite products from sugar-containing lignocellulosic materials, specifically of annual plants of non-woody nature, such as sugarcane bagasse, stalks of corn, sorghum and sunflower, without the addition of adhesive binders. The free sugars within the lignocellulosic materials, which are water soluble, are chemically transformed, in situ, by the application of heat and pressure into an insoluble and infusible polymeric substance, acting as both a bonding and bulking agent, to strengthen the reconstituted composite products with strong mechanical strength and superb dimensional stability. It is believed that the free sugars, carbohydrates or saccharides, and water soluble materials are chemically transformed into furfural and other derivatives, and further thermoset under heat and pressure to form a bond during the hot moulding operation. Thus produced, the bond binds, bulks and strengthens the lignocellulosic materials into reconstituted composite products with good mechanical strength and superb dimensional stability.

However, this patented process is limited to lignocellulosic materials containing free sugars only and is not applicable to lignocellulosic materials containing no free sugars, such as wood, cereal straws, rice husks and reeds.

The conventional process for making composite panel products from these lignocellulosic materials relies exclusively on synthetic resin binders for bonding. Since synthetic resins, such as phenol- and urea-formaldehyde, are expensive, they normally constitute a large portion of production cost for the conventional panel products, such as particleboard, waferboard and medium density fibreboard. This is especially true in the case of agricultural residues. Because of their physical nature, a relatively high content of resin binders is required for manufacturing, thus resulting in an expensive panel product. This is one of the major reasons why agricultural residues are not widely utilized today in the manufacturing of panel products, in spite of the abundance and availability of the raw materials.

In recent years a number of manufacturing processes have been developed to utilize agricultural residues as raw material for the production of panel products, for example rice husks, one of the most abundant yet the least utilized agricultural residues around the world. However, none of those processes so far developed has found commercial acceptance. Thus E. C. Lathrop et al. in "Hardboard from agricultural residues", Modern Plastics, 126 (April 1951) reported the use of a combination of powdered thermosetting phenolic resin, pine gum and ground rice husks to make composite panel products. He found that boards by using as much as 15 percent phenolic resin were too brittle to be nailed. Morever, the boards had a density of 1.12 (69.9 lbs. per cubic foot). This combination of 15 percent powdered resin and high density makes the product too expensive to compete with currently available products, and the brittleness of the board places a severe limitation to its use.

The use of a specially formulated phenolic resin for bonding rice husks has been reported by R. C Vasisshth in the U.S. Patent No. 3,850,677 dated Nov. 26, 1974. Rice husks boards can be made with 8 to 10 percent of a water immiscible, caustic free, thermosetting phenol-formaldehyde resin and pretreated rice husks. In his process, the pretreatment is essential because it breaks up rice husks pods into individual leaves, removes loosely bonded surface materials, and screens out fine particles. It is claimed that the inclusion of fine materials generated from the pretreatment would not only increase the resin consumption, but also introduce some undesirable effects on board property.

More recently, there was a publication "New opportunities in manufacturing conventional particleboard using isocyanate binders" reported by G. W. Ball (Proceedings—Washington State University Particleboard Symposium. No. 15, P 266—285, 1981). Rice husks board was made with pretreated rise husks, using 9 percent of very expensive polymeric isocyanate resins as a bonding agent. Since isocyanate resins are more expensive than the conventional phenolic resin, the production cost of rice husks boards must be very high. This makes rice husks board too expensive to compete with the conventional wood-based panel products.

Presently, the conventional manufacturing of panel products from ligno-cellulosic materials relies exclusively upon synthetic resin for bonding. Synthetic resin binders are expensive because they are derived from petro-chemicals. In general resin cost constitutes a major portion of production cost for panel products. Resin cost has been reported as high as 60 percent of production cost for panel products from agricultural residues. Therefore, in view of resin cost and raw material selection, a process that eliminates synthetic resin for manufacturing of composite products and uses any lignocellulosic materials would be very attractive.

WO 80/01 891 discloses a process of converting a lignocellulosic material into a reconstituted

composite product, said process comprising adding a material containing sugar or starch to the lignocellulosic material, forming the treated lignocellulosic material into a mat, pressing the mat at a temperature not exceeding the temperature at which the mat would char at a pressure and for a time sufficient to transform and thermoset the free sugars in the lignocellulosic material into a polymeric substance, which adhesively bonds together the lignocellulosic material to yield the reconstituted composite product.

One aspect of the present invention is specified in claim 1.

In accordance with another aspect of the present invention, (claim 2), there is also provided a process of converting lignocellulosic material containing at least 10% by weight hemicellulose into a reconstituted composite product, comprising:

(a) packing the lignocellulosic material is a sub-divided form into a pressure vessel,

(b) filling the pressure vessel rapidly with a high pressure steam to heat all the lignocellulosic material to a temperature high enough to release the hemicellulose but not exceeding the temperature of carbonization thereof, for a time sufficient to decompose and hydrolyze hemicellulose into water soluble material selected from pentose and hexose sugars, sugar polymers, dehydrated carbohydrates, furfural products and other decomposition products but with no significant degradation of cellulose occurring,

(c) extracting the lignocellulosic material from the pressure vessel to atmospheric pressure,

(d) drying the lignocellulosic material to a low moisture content to prevent fermentation of the decomposition products,

(e) forming the dried lignocellulosic material, alone or in combination with other lignocellulosic material, into a mat and

(f) pressing the mat at an elevated temperature not exceeding the temperature of charring of the mat, at a pressure and for a time sufficient to polymerize and thermoset the water soluble material into a polymeric substance which provides an adhesive bond between the other components of the lignocellulosic material and a bulking effect thereby forming the reconstituted composite product.

It will be understood that the process of the invention does not require the use of synthetic resin binder.

The reconstituted composite product may be in the form of a panel board, a building board, a furniture board, composite lumber, a densified fuel log or a moulded article.

The process of the invention is applicable to all lignocellulosic materials, regardless of origin, species, source, form, and shape. Such lignocellulosic materials can be any vegetation, particularly the residues from forestry and agricultural crops, in the form of trunk, bark, stalk, root, foliage, shell, pod, straw, husk and nut. They may be used singularly or in combination with other lignocellulosic materials to form reconstituted composite products without using the synthetic resin binders, such as urea- and phenol-formaldehyde resin commonly being employed in the conventional manufacturing of wood-based panel products.

I have discovered that free sugars can be generated from hemicellulose in any lignocellulosic materials and utilized as a bonding agent for reconstituted composite products, thus eliminating the use of synthetic resin binders. It is well known that lignocellulosic materials comprise three main components; cellulose, hemicellulose and lignin. Chemically, cellulose, which is the main structural component of all plant cell walls and which constitutes about 40 to 60 percent of lignocellulosic materials, is a linear polysaccharide built up from anhydro glucose units having the general formula $(C_6H_{10}O_5)_n$. Cellulose is crystalline in nature.

Hemicellulose is the name given to non-cellulosic low molecular weight polysaccharides, associated in plant tissues with cellulose in the lignocellulosic materials. Hemicellulose, which constitutes about 20 to 35 percent of the lignocellulosic materials, may be repeated by the general formula

$$(C_5H_8O_4)_{n1}.\ (C_6H_{10}O_5)_{n2},$$

representing 5 and 6 carbon sugars, such as pentosan and hexosan. The third main component is lignin which occurs in 20 to 30 percent of the lignocellulosic materials. The precursors of lignin and its formation in lignocellulosic materials are still not completely elucidated, although recently, considerable progress has been made. Today lignin is generally accepted to be a polymeric material made up of phenylpropane units.

Since hemicellulose is in situ largely amorphous in character, it has great accessibility to water. Thus, hemicellulose is decomposed about 100 times faster than cellulose, and hence hemicellulose can be hydrolyzed selectively without the degradation of cellulose. The general hydrolysis reaction is:

$$(C_5H_8O_4)_{n1}.\ (C_6H_{10}O_5)_{n2}+(n_1+n_2)\ H_2O \rightarrow n_1C_5H_{10}O_5+n_2C_6H_{12}O_6,$$

yielding 5 and 6 carbon sugars. These free sugars are reactive and can be decomposed under heat into furfural and other decomposition products, which can be further transformed into a polymeric substance to provide a bonding and bulking effect on lignocellulosic materials by the application of heat and pressure in a moulding operation, resulting in reconstituted composite products with good mechanical strength and excellent dimensional stability.

Preferred embodiment of the invention

This invention process comprises two major parts of operation. The first part is to decompose and hydrolyze the hemicellulose portion of the lignocellulosic materials and convert it into free sugars, carbohydrates, or monosaccharides, such as xylose, arabinose, mannose and galactose. The second part of the process is to chemically transform and thermoset the free sugars, in situ, into a polymerized substance, compounding the lignocellulosic materials into a reconstituted composite products.

It has been found that since hemicellulose can be selectively decomposed and hydrolyzed at a much faster rate than cellulose, it is possible to convert only the hemicellulose into free sugars for bonding without destroying the cellulose. To achieve this, a high pressure steam treating method or so-called auto-hydrolysis has been discovered to be very satisfactory for the invention. During high pressure steaming of lignocellulosic materials, hemicellulose would first undergo decomposition reaction. First, acetic acid is formed by cleavage of acetyl side chains, and the weak acidic environment thus created is sufficient to promote hydrolysis of hemicellulose. The depolymerization reaction is believed to be a sequential reaction. During the initial phase of the reaction process, random attack by acid in hemicellulose chains produces oligomers of varying degrees of polymerization. The oligomers are further hydrolyzed to monomers which are further degraded to furfural and other decomposition products. Simultaneously, the lignin portion of lignocellulosic materials is also decomposed and hydrolyzed to low molecular weight lignin and lignin products. Only the cellulose remains relatively unchanged. The steam treated lignocellulosic materials normally have about 10 to 30 percent of water solubles which contain sugars, sugar polymers, dehydrated carbohydrates, furfural products, lignin and lignin products. The free sugars, furfural, and other decomposition products are essential parts of the present invention. When chemically transformed under heat and pressure, they thermoset and crosslink into a polymeric substance acting as both a bonding and bulking agent for the reconstituted composite products from the steam treated lignocellulosic materials.

The conventional process for making panel products from lignocellulosic materials requires an amount of 8 to 12 percent by weight of synthetic resin binder. Since hemicellulose normally constitutes about 20 to 35 percent of lignocellulosic materials, there is enough basic matter to generate free sugars for bonding. The amount of free sugars which can be generated from the lignocellulosic materials is mainly dependant upon the nature of the raw materials and the degree of steaming treatment. Normally, agricultural residues and hardwood contain more hemicellulose than coniferous softwood.

In order to optimize the conversion of hemicellulose into free sugars, a proper control of the high pressure steaming treatment is an important part of the present invention. Oversteaming would not only cause carbonization of the treated material but also lose some of the free sugars and the furfural products in particular. Experimental work on rice husks which contain about 20.4 percent hemicellulose as determined by pentosan analysis indicated that by the combination of steam temperature, or steam pressure, and steaming time, 70 to 80 percent of the hemicellulose can be converted into pentose sugars and furfural products. The accompanying drawing demonstrates the time and steam temperature required to obtain the maximum of free sugars and furfural products. The inverse relationship between time and steam temperature is clealy shown: The higher the temperature used, the shorter the time required, and vice versa. To a lesser extent, moisture content, shape and size of the lignocellulosic materials also have some effect on maximization of the free sugars.

At the end of the steaming treatment, the lignocellulosic material can be collected either by a sudden release or by a gradual release of steam pressure from the pressure vessel. The sudden release of high pressure steam would explode and shred the treated material into a fibrous lump with high moisture content. The slow and gradual release of steam pressure enables the treated material to retain, more or less, its original shape and size. In contrast to the batch system of treating the lignocellulosic material, it is also practical to use a continuous process to steam treat the raw material. This process can be easily adopted to a continuous digester or vessel in which the lignocellulosic material is constantly under the steam pressure, and is fed and extruded continously from the digester. The material thus treated by the high temperature steam is light to dark brown in colour and has a moisture content from about 40 to more than 100 percent, depending on the initial moisture content of the lignocellulosic material and the severity of hydrolysis. The water in the treated material is also light to dark brown in colour and contains mostly sugars, lignin and a small amount of furfural products. The treated lignocellulosic materials should be dried immediately to a low moisture content of less than 18 percent. Otherwise, the sugars in the treated lignocellulosic material would start fermentation particularly in a humid and warm environment. If fermentation takes place, all free sugars would be transformed to alcohol and acetic acid. Once this happens, the treated lignocellulosic material would not be acceptable for making composite products because there are no free sugars remaining to provide the bonding effect.

Here the first part of the present invention ends: A dried lignocellulosic material containing a high proportion of free sugars is ready for the manufacturing of reconstituted composite products.

The second part of the present invention begins. In the form of individual fibres, particles, strands, flakes, or in a form of lumps, chunks, bundles and aggregates, the dried lignocellulosic materials are formed singularly or in combination with other lignocellulosic materials into a desired mat, and then moulded under heat and pressure for a sufficient time to consolidate the mat into a rigid article. The moulding temperature can be in the range of 160 to 250°C, preferably in the range of 200 to 220°C. The

press time is dependent on press temperature and mat dimension, while the pressure is mainly the function of density of the moulded article desired.

During the hot moulding operation, the sugars, furfural products and other decomposition products will polymerize and bond in situ the lignocellulosic material to produce a rigid article. In addition, the sugars, which permeate within the cell wall tissue of the lignocellulosic material, will also be transformed and thermoset to a polymeric substance, acting as a bulking agent throughout the entire moulded article. Thus, the moulded articles possess excellent mechanical strength and superb dimensional stability with a thermoset adhesive bond which is resistant to boiling water and acid hydrolysis. Furthermore, the composite products thus manufactured are free from the toxic formaldehyde emission because conventional synthetic resin binders are not used.

Another important feature of this invention is the discovery of destruction of epidermis in agricultural residues such as rice husks, sugar cane bagasse and cereal straws by the steaming treatment, particularly when combined with a sudden release of steam pressure at the end of the steaming treatment. Because of the waxy material of the epidermis which is impervious to water and hence the adhesive bond, the elimination of epidermis would enhance the interface bonding between individual elements.

Yet another unique feature of my invention is the discovery of the extra benefits from the destruction and conversion of hemicellulose. As stated, in natural condition, hemicellulose is largely amorphous in character and has great accessibility to water, making lignocellulosic materials highly hygroscopic, and resulting in dimensional changes. Since the treated lignocellulosic materials are almost completely free from hemicellulose, in accordance with my invention the reconstituted composite products would be far less hygroscopic, and hence have better dimensional stability.

Embodiment of the invention will be described and illustrated in detail in the following examples:

Example 1. Rice husk boards

This example shows the effect of steaming time and steam temperature on rice husk board. Seven batches of rice husks were treated to various steaming conditions. Dry rice husks with 8% moisture content were first packed in the pressure vessel and the vessel was rapidly filled with high pressure steam to heat up the rice husks to a desired temperature for a predetermined time.

At the end of steaming, the steam pressure was suddenly released and the rice husks were extracted from the vessel in a hot, moist and fibrous condition. The moisture content of the steamed rice husks varied from about 40 to 60%. A total of 7 batches was treated with different temperatures (from 190 to 260°C) and times (from 15 seconds to 10 minutes). Samples were taken from each batch of the treated rice husks for pentosan determination (Tappi method—T 223 OS—78). To be pressed into boards the steamed rice husks were immediately dried to a moisture content of about 3 to 4%.

Seven boards, each 18×18×7/16 inches (46×46×1.1 cm), were made with a specific gravity of 1.0 (62.4 pcf (1000 kg/$M^3$)). The same press condition was used for all 7 boards (press temperature 220°C, press pressure 600 psi (40 kg/$cm^3$) and press time 10 minutes). Test results are summarized in the following Table 1.

TABLE 1.
Pentosan analysis and physical property of 7 rice husks boards.

| Treatment | | Pentosan* obtained (%) | Modulus of elasticity (psi) (MPa) | Modulus of rupture (psi) (kPa) | | Internal bond (psi) (kPa) | Swell after 2 hrs boil (%) |
|---|---|---|---|---|---|---|---|
| Temperature (°C) | Time (sec) | | | dry | boiled | | |
| 280 | 15 | 18.2 | 624,000<br>430 | 2740<br>18.9 | 1360<br>9.4 | 156<br>1075 | 9.6 |
| 260 | 20 | 17.6 | 631,000<br>435 | 2720<br>18.7 | 1280<br>8.8 | 164<br>1130 | 10.2 |
| 250 | 30 | 18.2 | 644,000<br>424 | 2660<br>18.3 | 1380<br>9.5 | 152<br>1950 | 10.7 |
| 240 | 60 | 17.3 | 606,000<br>418 | 2540<br>17.5 | 1400<br>9.7 | 142<br>975 | 11.2 |
| 230 | 120 | 16.7 | 597,000<br>411 | 2520<br>17.4 | 1360<br>9.4 | 156<br>1070 | 11.8 |
| 210 | 360 | 16.2 | 556,000<br>383 | 2490<br>17.2 | 1280<br>8.8 | 148<br>1030 | 12.0 |
| 190 | 600 | 15.5 | 524,000<br>361 | 2380<br>16.4 | 1170<br>8.1 | 108<br>820 | 15.2 |

*Chemical analysis indicated that the original rice husks contained 20.4% pentosans.

The mechanical strength and physical property of all 7 rice husk boards surpassed the CAN-3-0188-2M 78 requirements for exterior grade waferboard.

Example 2. Wheat straw medium density fibreboard.

Wheat straws were cut into 3 to 4 inch lengths and air dried to a moisture content of 8 to 10%. The wheat straws were given a steam treatment at 240°C for 35 seconds. The pressure was instantly released. The treated mass had a moisture content of about 60% and was dried to a moisture content of 4 to 5%. The dried straws were shredded to a loose fibrous state and then formed into a mat. The mat was hot pressed at 210°C and at a pressure of 400 psi (28 kg/$M^2$) for 10 minutes. The board 18×18×7/16 inches (45×45×1.1 cm) having a specific gravity of 0.75 (47 pcf (750 kg/$M^3$)). Tests of the board indicated as follows:

MOR: 2400 psi (16.9 MPa), wet MOR: 1100 psi
IB: 78 psi (600 kPa)
MOE: 547,000 psi (510 MPa)
Swelling after 2 hrs boiling: 8.6%

Example 3. Peanut shell board

Dried peanut shells with a moisture content of 7% were treated with high pressure steam at 240°C for 30 seconds. The pressure was instantly released. The treated mass contained 63% moisture content and had a water soluble material of 16.2% by weight. The treated material was dried to 5% moisture content and shredded into a fluffy fibrous bundle. A mat was formed and hot pressed at 220°C with a pressure of 400 psi (28 kg/$M^2$) for 10 minutes to produce a panel of 18×18×7/16 inches (46×46×1.1 cm) with a specific gravity of 0.82 (51 pcf (820 kg/$M^3$)). Test results show the following properties:

MOR: 1900 psi (13.4 MPa), wet MOR 1080 psi (7.6 MPa)
IB: 86 psi (600 kPa)
MOE: 460,000 psi (302 MPa)
Swelling after 2 hrs boiling: 8.6%

Example 4. Aspen particleboard

This example shows the combination of steam treated lignocellulosic material with other lignocellulosic material for making board. Aspen chips were treated with high pressure steam at 250°C for 70 seconds and the pressure was then instantly released. The pulpy mass contained a high proportion of sugars and water soluble materials. After drying, this material was ground into fine powdery particles and

passed through a 100 mesh screen. The powdery particles were mixed with an equal amount by weight of aspen wood splinters (passed through a 1/4 mesh screen). A mat was formed with 40% by weight of the ground material for face layers. The core of the mat was comprised of 60% by weight of the mixture of steam treated and ground powdery particles and aspen splinters. The mat was hot pressed at 210°C with a pressure of 400 psi (28 $kg/cm^2$) for 8 minutes to yield a panel of 18×18×7/16 inches (46×46×1.1 cm) with a specific gravity of 0.78 (49 pcf (780 $kg/M^3$)). Test results indicate the following properties:

MOR: 2540 psi (17.8 Mpa), wet MOR: 1420 psi (10.0 MPa)
IB: 78 psi (550 kPa)
MOE: 590,000 psi (462 MPa)
Swelling after 2 hrs boiling: 7.5%

This panel had a very smooth and tight surface, being of equal or superior quality to that of wet process hard board made conventionally. All the properties surpassed the CAN. 3-0188.2-M78 requirements for exterior grade waferboard.

Example 5. Mixed species board

This example shows the steam treatment to a mixture of different lignocellulosic materials for board making. Equal parts, by bone dry weight, of peanut shell, rice straw and planer shavings of spruce wood were mixed and treated at a steam temperature 240°C for about 35 seconds. The pressure was instantly released. The wet lumpy mass having 50% moisture content was dried to 5% M.C. and shredded to fibrous mass. A board of 18×18×7/16 inches (46×46×1.1 cm) was pressed at a temperature of 220°C for 10 minutes with a pressure of 450 psi (32 $kg/M^2$). The specific gravity of the board was 0.80 (50 pcf (800 $kg/M^3$)). Test results indicate the following properties:

MOR: 2200 psi (15.5 MPa), wet MOR: 1090 psi (7.7 MPa)
IB: 86 psi (600 kPa)
MOE: 497,000 psi (378 MPa)
Swelling after 2 hrs boiling: 8.6%

Example 6. Poplar waferboard

This example demonstrates the high pressure steam treatment but without the explosion release of pressure at the end. This particular treatment enables the treated lignocellulosic material to retain its shape and size. Poplar wafers of 1.5×2×0.03 inches (3.8×50×0.07 cm) were treated to steam temperature of 240°C for about 30 seconds. Next, the steam pressure was gradually released to atmospheric pressure (about 1.5 minutes). The treated wafers contained about 52% moisture content and were dried to 4% for board making. A panel of 18×18×7/16 inches (46×46×1.1 cm) was made to a specific gravity of 0.70 (44 pcf (700 $kg/M^3$)). The platen temperature was 220°C; press time 8 minutes; pressure 450 psi. Test results are summarized as follows:

MOR: 2480 psi (17.5 MPa), wet MOR: 1350 psi (9.5 MPa)
IB: 68 psi (480 kPa)
MOE: 648,000 psi (463 MPa)
Swelling after 2 hrs boiling: 16.5%

This board would pass the CAN 3-0188.2-M78 requirements for exterior grade waferboard.

Example 7. Logging residue board

This example shows the possibility of converting logging residues into panel products with no addition of adhesive binders. A white spruce tree top which consisted of about 40% wood, 40% foliage and 20% bark was chipped to pass a 1/2 inch screen. The chips contained about 53% moisture content and showed sign of fungus attack. The chips were packed in a pressure vessel to receive a steam treatment at 235°C for 60 seconds. The pressure was instantly released at the end of the treatment. The fibrous material had a moisture content of 116% and a sugar content of 15.5%. This material was dried to a low moisture content of 3% for making board. One board of 18×18×7/16 inches was made to a specific gravity of 0.92 (57.4 pcf (920 $kg/M^3$)) with a press temperature of 230°C, a pressure of 450 psi (32 $kg/M^2$) and a press time of 12 minutes. Test results are listed below:

MOR: 1870 psi (13.2 MPa), wet MOR: 1160 psi (8.2 MPa)
IB: 86 psi (810 kPa)
MOE: 448,000 psi (324 MPa)
Swelling after 2 hrs boiling: 14.5%

Example 8. The effect of acidic catalyst

This example demonstrates the usefulness of acidic catalysts in preparing lignocellulosic materials for board making. Fresh sugarcane bagasse containing 49% moisture content was added 0.4% by weight of sulfuric acid in solution. The bagasse was treated at a steam temperature of 220°C for 2 minutes. For comparison purposes, another batch of the same bagasse was treated with same steaming temperature and time, but without the addition of sulfuric acid. After the steam treatment, the bagasse was dried to a moisture content of 5%. One board of 18×18×7/16 inches (46×46×1.1 cm) with a specific gravity of 0.72

(45 pcf (720 kg/M$^3$)) was made from each batch of bagasse, using one press condition, press temperature 220°C, pressure 400 psi (28 kg/M$^2$) and press time 10 minutes. Test results are listed as follows:

Acid treated
MOR: 2630 psi (18.5 MPa), wet MOR: 1820 psi (12.9 MPa)
IB: 75 psi (530 kPa)
MOE: 574,000 psi (402 MPa)
Swelling after 2 hrs boiling: 8.7%

Not treated
MOR: 1540 psi (10.8 MPa), wet MOR: 260 psi (1.8 MPa)
IB: 36 psi (250 kPa)
MOE: 368,000 psi (263 MPa)
Swelling after 2 hrs boiling: 52%

The higher mechanical strength and lower thickness swelling of the board made from the acid treated bagasse was mainly due to the higher proportion of the free sugars, furfurals and other decomposition products generated from the hemicellulose. Chemical analysis indicated that the acid treated bagasse contained 16.5 percent pentosans and the control contained only 7.3 percent.

Example 9. Densified fuel log

This example demonstrates the making of waterproof densified solid fuel logs from saw mill residues which contain about 60% wood and 40% bark by weight. These residues were made up from softwood species of pine, spruce and fir with a moisture content of about 40%. They were first chipped to pass 1/4 inch screen, dried to a moisture content of less than 10%, and then given a steaming treatment at 220°C for 1 minute. The treated material was extruded continuously from the treating vessel at the end of steaming, and was immediately fed to a heated extrusion machine in such a way that a minimum of heat was lost from the treated material.

After extrusion, a waterproof solid fire log of 12 inch (30 cm) length and 4 inch (10 cm) diameter was obtained. This fuel log had a specific gravity of 1.22 and did not disintegrate in boiling water. After a long period of outdoor storage, the weathered fuel log retained its good handling properties and combustion characteristics.

## Claims

1. A process of converting a lignocellulosic material into a reconstituted composite product, comprising; treating the lignocellulosic material in divided form with steam to heat the lignocellulosic material to a temperature high enough to relase hemicellulose but not exceeding the temperature of carbonization, for a time sufficient to decompose and hydrolyze hemicellulose into free sugars, sugar polymers, dehydrated carbohydrates, furfural products and other decomposition products, forming the treated lignocellulosic material into a mat and pressing the mat at a temperature not exceeding the temperature at which the mat would char, at a pressure and for a time sufficient to transform and thermoset the free sugars, sugar polymers, dehydrated carbohydrates, furfural products and other decomposition products in the lignocellulose material into a polymeric substance, which adhesively bonds together the lignocellulosic material to yield the reconstituted composite product.

2. A process of converting lignocellulosic material containing at least 10% by weight hemicellulose into a reconstituted composite product, comprising:

(a) packing the lignocellulosic material in a sub-divided form into a pressure vessel,

(b) filling the pressure vessel rapidly with a high pressure steam to heat all the lignocellulosic material to a temperature high enough to release the hemicellulose but not exceeding the temperature of carbonization thereof, for a time sufficient to decompose and hydrolyze hemicellulose into water soluble material selected from pentose and hexose sugars, sugar polymers, dehydrated carbohydrates, furfural products and other decomposition products but with no significant degradation of cellulose occurring,

(c) extracting the lignocellulosic material from the pressure vessel to atmospheric pressure,

(d) drying the lignocellulosic material to a low moisture content to prevent fermentation of the decomposition products,

(e) forming the dried lignocellulosic material, alone or in combination with other lignocellulosic material, into a mat and

(f) pressing the mat at an elevated temperature not exceeding the temperature of charring of the mat, at a pressure and for a time sufficient to polymerize and thermoset the water soluble material into a polymeric substance which provides an adhesive bond between the other components of the lignocellulosic material and a bulking effect thereby forming the reconstituted composite product.

3. A process according to claim 2, wherein the hemicellulose portion of the lignocellulosic material is decomposed and hydrolyzed in the pressure vessel using high pressure steam at a temperature in the range of 120°C to 280°C.

4. A process according to any of claims 2 or 3, wherein the steam pressure is instantly released with an explosive discharge to render the lignocellulosic material into fibrous and particulate form.

5. A process according to any of claims 2 or 3, wherein the steam pressure is gradually released to atmospheric pressure to retain the lignocellulosic material in its original form.

6. A process according to any of claims 2 to 5, wherein the steam pressure is constantly maintained within the pressure vessel while the steam treated material is continuously extruded.

7. A process according to any of claims 1 to 6, wherein the lignocellulosic material, after high pressure steam treatment, is dried to a moisture content of less than 18 percent to prevent fermentation and to accelerate the thermoset during hot-pressing.

8. A process according to any of claims 2 to 7, wherein the formed mat is hot-pressed at a temperature in the range of 160—250°C.

9. A process according to any of claims 2 to 8, wherein the sub-divided lignocellulosic material is mixed with an acidic catalyst in an amount of no more than 5 percent by weight before steaming.

10. A process according to any of claims 2 to 9, wherein the lignocellulosic material is derived from one or more of forest vegetation and agricultural plants of woody or non-woody nature in the form of stem, stalk, shrub, foliage, bark, root, shell, pod, nut, husk, fibre, straw, vine, grass, bamboo and reed, singularly or in a mixture.

11. A process according to any of claims 2 to 10, wherein the subdivided lignocellulosic material is in the form of particles, fibres, strands, wafers or flakes before or after step (d).

**Patentansprüche**

1. Verfahren zur Umwandlung eines Lignozellulosematerials in einen rekonstituierten Verbundstoff, umfassend: Behandeln des Lignozellulosematerials in zerteilter Form mit Wasserdampf, um das Lignozellulosematerial auf eine Temperatur zu erwärmen, die hoch genug ist, um Hemizellulose freizusetzen, aber nicht die Verkohlungstemperatur überschreitet, über einen Zeitraum, der ausreicht, um die Hemizellulose zu freien Zuckern, Zuckerpolymeren, dehydrierten Kohlehydraten, Furfuralprodukten und anderen Zersetzungsprodukten zu zersetzen und zu hydrolysieren, Formen des behandelten Lignozellulosematerials zu einer Matte und Pressen der Matte bei einer Temperatur, die nicht die Temperatur überschreitet, bei der die Matte verkohlt wird, bei einem Druck und während eines Zeitraums, der ausreicht, um die freien Zucker, Zuckerpolymere, dehydrierten Kohlehydrate, Furfuralprodukte und anderen Zersetzungsprodukte im Lignozellulosematerial in eine polymere Substanz umzuwandeln und wärmezuhärten, die das Lignozellulosematerial adhäsiv bindet, um den rekonstituierten Verbundstoff zu ergeben.

2. Verfahren zur Umwandlung eines Lignozellulosematerials, das wenigstens 10 Gew.-% Hemizellulose enthält, in ein rekonstituiertes Verbundstoffprodukt, umfassend:

(a) Einbringen des Lignozellulosematerials in zerteilter Form in ein Druckgefäß,

(b) rasches Füllen des Druckgefäßes mit Hochdruck-Wasserdampf, um das gesamte Lignozellulosematerial auf eine Temperatur zu erwärmen, die hoch genug ist, um die Hemizellulose freizusetzen, aber nicht die Verkohlungstemperatur derselben überschreitet, während eines Zeitraums, der ausreicht, um Hemizellulose zu einem wasserlöslichen Material zu zersetzen und zu hydrolysieren, das aus Pentose- und Hexosezuckern, Zuckerpolymeren, dehydrierten Kohlehydraten, Furfuralprodukten, und anderen Zersetzungsprodukten gewählt ist, währenddessen jedoch kein signifikanter Abbau der Zellulose erfolgt,

(c) Extrahieren des Lignozellulosematerials aus dem Druckgefäß auf atmosphärischen Druck,

(d) Trocknen des Lignozellulosematerials auf einen geringen Feuchtigkeitsgehalt, um die Fermentation der Zersetzungsprodukte zu verhindern,

(e) Formen des getrockneten Lignozellulosematerials, allein oder in Kombination mit anderen Lignozellulosematerialien, zu einer Matte und

(f) Pressen der Matte bei erhöhter Temperatur, die nicht die Temperatur überschreitet, bei der die Matte verkohlt wird, bei einem Druck und während eines Zeitraums, der ausreicht, um das wasserlösliche Material zu einer polymeren Substanz zu polymerisieren und wärmezuhärten, die eine adhäsive Bindung zwischen den anderen Bestandteilen des Lignozellulosematerials und ein Anschwellen bewirkt, wodurch das rekonstituierte Verbundstoffprodukt gebildet wird.

3. Verfahren nach Anspruch 2, worin der Hemizelluloseanteil des Lignozellulosematerials im Druckgefäß unter Verwendung von Hochdruckwasserdampf bei einer Temperatur innerhalb eines Bereiches von 120 bis 280°C zersetzt und hydrolysiert wird.

4. Verfahren nach Anspruch 2 oder 3, worin der Dampfdruck plötzlich explosionsartig entspannt wird, um das Lignozellulosematerial in Faser- und Teilchenform überzuführen.

5. Verfahren nach Anspruch 2 oder 3, worin der Dampfdruck allmählich auf atmosphärischen Druck entspannt wird, um das Lignozellulosematerial in seiner ursprünglichen Form zu erhalten.

6. Verfahren nach einem der Ansprüche 2 bis 5, worin der Dampfdruck innerhalb des Druckgefäßes konstant gehalten wird, während das mit Dampf behandelte Materiäl kontinuierlich extrudiert wird.

7. Verfahren nach einem der Ansprüche 1 bis 6, worin das Lignozellulosematerial nach der Behandlung mit Hochdruckwasserdampf auf einen Feuchtigkeitsgehalt von weniger als 18% getrocknet wird, um die Fermentation zu verhindern und die Wärmehärtung während des Heißpressens zu beschleunigen.

8. Verfahren nach einem der Ansprüche 2 bis 7, worin die geformte Matte bei einer Temperatur innerhalb eines Bereiches von 160 bis 250°C heißgepreßt wird.

9. Verfahren nach einem der Ansprüche 2 bis 8, worin das zerteilte Lignozellulosematerial vor der Dampfbehandlung mit einem Säurekatalysator in einer Menge von nicht mehr als 5 Gew.-% vermischt wird.

10. Verfahren nach einem der Ansprüche 2 bis 9, worin das Lignozellulosematerial von einer oder mehreren Wald- oder Ackerbaupflanzen holziger oder nichtholziger Beschaffenheit in der Form von Stämmen, Stengeln, Büschen, Blättern, Rinden, Wurzeln, Schalen, Hülsen, Nüssen, Spreu, Fasern, Stroh, Schlingpflanzen, Reb- und anderen Pflanzenstöcken, Gras, Bambus und Schilf einzeln oder vermischt abgeleitet ist.

11. Verfahren nach einem der Ansprüche 2 bis 10, worin das zerteilte Lignozellulosematerial vor oder nach dem Schritt (d) die Form von Teilchen, Fasern, Strängen, Plättchen oder Flocken aufweist.

**Revendications**

1. Procédé pour convertir un matériau lignocellulosique en un produit composite reconstitué, comprenant le traitement du matériau lignocellulosique sous forme divisée avec de la vapeur pour chauffer le matériau lignocellulosique à une température suffisamment élevée pour libérer l'hémicellulose mais ne dépassant pas la température de carbonisation, pendant une durée suffisante pour décomposer et hydrolyser l'hémicellulose en sucres libres, polymères de sucres, hydrates de carbone déshydratés, produits furfuryliques et autres produits de décomposition, la mise en forme du matériau lignocellulosique traité en une plaque et la mise sous pression de la plaque à une température ne dépassant pas la température à laquelle la plaque se carboniserait, sous une pression et pendant une durée suffisante pour transformer et thermodurcir les sucres libres, les polymères de sucres, les hydrates de carbone déshydratés, les produits furfuryliques et autres produits de décomposition dans le matériau lignocellulosique en une substance polymérique, adhésive, qui lie le matériau cellulosique pour donner le produit composite reconstitué.

2. Procédé pour convertir un matériau lignocellulosique, contenant un moins 10% en poids d'hémicellulose, en un produit composite reconstitué, comprenant:

a) garnir un récipient pouvant être mis sous pression du matériau cellulosique sous forme divisée.

b) remplir ledit récipient rapidement avec une vapeur sous haute pression pour chauffer tout le matériau lignocellulosique à une température suffisamment élevée pour libérer l'hémicellulose mais ne dépassant pas sa température de carbonisation, pendant une durée suffisante pour décomposer et hydrolyser l'hémicellulose en matériau soluble dans l'eau pouvant comprendre des pentoses et hexoses, des polymères de sucres, des hydrates de carbone déshydratés, des produits furfuryliques et autures produits de décomposition, mais sans qu'il y ait dégradation significative de la cellulose,

c) extraire le matériau lignocellulosique dudit récipient à la pression atmosphérique,

d) sécher le matériau lignocellulosique jusqu'à une faible teneur en humidité pour empêcher la fermentation des produits de décomposition,

e) mettre le matériau lignocellulosique séché, seul ou en combinaison avec d'autres matériaux cellulosiques, sous forme d'une plaque et

f) mettre la plaque sous pression à une température élevée ne dépassant pas la température de carbonisation de la plaque, sous une pression et pendant une durée suffisante pour polymériser et thermodurcir le matériau hydrosoluble en une substance polymérique qui fournit un liant adhésif entre les autres composantes du matériau lignocellulosique et un effet de structure, formant ainsi le produit composite reconstitué.

3. Procédé selon la revendication 2, dans lequel la partie hémicellulosique du matériau lignocellulosique est décomposée et hydrolysée dans le récipient sous pression en utilisant de la vapeur sous haute pression à une température dans le domaine de 120°C à 280°C.

4. Procédé selon l'une quelconque des revendications 2 ou 3, dans lequel la pression de vapeur est relâchée instantanément avec une décharge explosive pour rendre le matériau cellulosique sous forme de fibres et de particules.

5. Procédé selon l'une quelconque des revendications 2 ou 3, dans lequel la pression de vapeur est relâchée progressivement jusqu'à la pression atmosphérique pour conserver le matériau lignocellulosique dans sa forme d'origine.

6. Procédé selon l'une quelconque des revendications 2 à 5, dans lequel la pression de vapeur est constamment maintenue dans le récipient sous pression pendant que le matériau traité à la vapeur est extrudé en continu.

7. Procédé selon l'une quelconque des revendications 1 à 6, dans lequel le matériau lignocellulosique, après le traitement par la vapeur sous haute pression, est séché jusqu'à une teneur en humidité de moins de 18% pour empêcher la fermentation et pour accélérer le thermodurcissage durant le pressage à chaud.

8. Procédé selon l'une quelconque des revendications 2 à 7, dans lequel le plaque formée est pressée à chaud à une température dans le domaine de 160 à 250°C.

9. Procédé selon l'une quelconque des revendications 2 à 8, dans lequel le matériau lignocellulosique

divisé est mélangé à un catalyseur acide dans une teneur ne dépassant pas 5% en poids, avant le traitement à la vapeur.

10. Procédé selon l'une quelconque des revendications 2 à 9, dans lequel le matériau lignocellulosique est tiré de 1 ou plusieurs végétaux sylvestres et de plantes agricoles de nature ligneuse ou non ligneuse sous forme de troncs, tiges, arbustes, feuillages, écorces, racines, coquilles, cosses, noix, pelures, fibres, pailles, sarments, herbes, bambous, et roseaux, seuls ou en mélange.

11. Procédé selon l'une quelconque des revendications 2 à 10, dans lequel le matériau lignocellulosique divisé est sous forme de particules, de fibres, de brins, de cachets ou de flocons avant ou après l'étape (d).

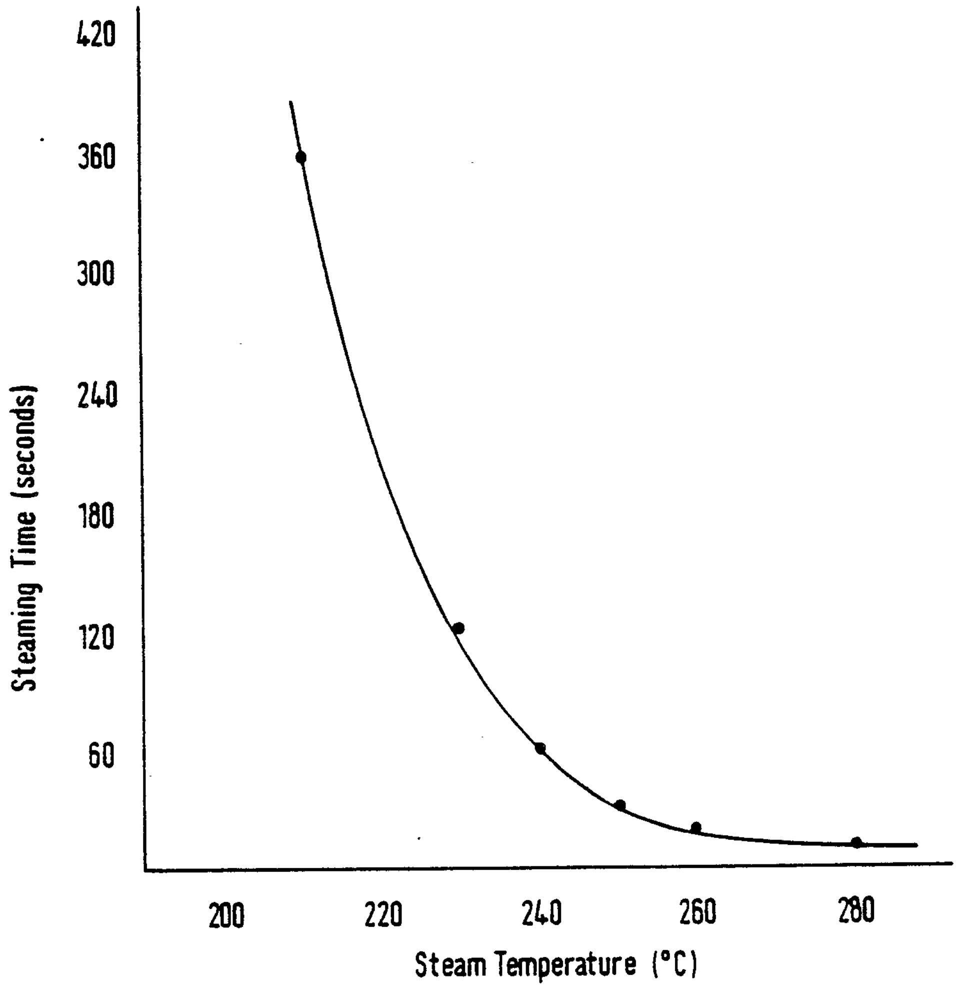


Time and Steam Temperature Required to Obtain Maximum Pentosans from Rice Husks.